Europäisches Patentamt

**European Patent Office**

Office européen des brevets

(11) Veröffentlichungsnummer: **0 559 939 A1**

(12) **EUROPÄISCHE PATENTANMELDUNG**

(21) Anmeldenummer: **92104209.9**

(22) Anmeldetag: **11.03.92**

(51) Int. Cl.5: **G06F 12/14**, G06F 9/38, G06F 9/30

(43) Veröffentlichungstag der Anmeldung:
**15.09.93 Patentblatt 93/37**

(84) Benannte Vertragsstaaten:
**AT BE CH DE DK ES FR GB GR IT LI LU MC NL PT SE**

(71) Anmelder: **Siemens Nixdorf Informationssysteme Aktiengesellschaft Fürstenallee 7 D-33102 Paderborn(DE)**

(72) Erfinder: **Huss, Rolf-Rüdiger, Dr. Lindacher Strasse 8 W-8000 München 60(DE)**

(74) Vertreter: **Fuchs, Franz-Josef, Dr.-Ing. et al Postfach 22 13 17 D-80503 München (DE)**

(54) **Schaltungsanordnung zur Überwachung von Zugriffen auf einen vorgegebenen Speicherbereich eines Speichers.**

(57) Um Überlappungen zwischen einem vorgegebenen und einem von einem Zugriff betroffenen Speicherbereich festzustellen, werden die durch zwei Adressen (X:STA und END bzw. Y: ZA und ZE) gebildeten Bereichsgrenzen entsprechend den Ungleichungen $(Y_E - X_A \geq 0)$ und $(X_E - Y_A \geq 0)$ bzw. $(Y_E - X_A \geq 0)$ und $(\overline{Y_A - X_E \geq 0})$ bei Kennzeichnung des auf den letzten Speicherabschnitt des vorgegebenen Speicherbereichs folgenden Speicherabschnitts durch $X_E$ durch zwei Übertragsermittlungsschaltungen (CLA1 und CLA2) für Subtrahierer wechselseitig in Beziehung gesetzt. Die aus den Subtraktionen gewonnenen beiden höchstwertigen Übertragssignale (CO1 und CO2) werden zu einem Steuersignal (HIT) verknüpft, das bei erfüllter Verknüpfungsbedingung einen Eingriff in den vorgegebenen Speicherbereich durch den Zugriff anzeigt.

FIG 1

Die Erfindung betrifft eine Schaltungsanordnung zur Überwachung von Zugriffen auf einen durch zwei Adressen vorgegebenen Speicherbereich eines Speichers, um Überlappungen zwischen dem vorgegebenen und dem vom Zugriff betroffenen Speicherbereich festzustellen.

Bei jedem Lese- oder Schreibzugriff auf einen Speicher in einem Datenverarbeitungssystem ist vielfach zu überwachen, ob ein vorgegebener Speicherbereich des Speichers mit dem vom Zugriff betroffenen Speicherbereich wenigstens teilweise übereinstimmt. Zu diesem Zweck findet ein Vergleich der die beiden Speicherbereiche jeweils festlegenden Adressen statt, von denen eine Anfangs- und eine Endadresse die Bereichsgrenzen des vorgegebenen Speicherbereichs bilden.

Bei der Befehlsverarbeitung beispielsweise werden durch die Anfangsadresse der bereits im Vorgriff gelesene und in einem Befehlspufferspeicher abgelegte, als nächstes auszuführende Maschinenbefehl sowie durch die Endadresse der jeweils als nächstes zu lesende Befehl festgelegt. Eine Überwachung des dadurch definierten Speicherbereiches auf einen möglichen Speicherbereichskonflikt erfolgt jeweils bis zum letzten Byte vor der Endadresse. Der Konflikt entsteht dadurch, daß Daten des zuvor ausgeführten Befehls in diesen vorgegebenen Speicherbereich zurückgeschrieben werden, so daß der bereits im Befehlspufferspeicher hinterlegte, als nächstes auszuführende Befehl nicht mehr die aktuellen Daten enthält. Eine andere Anwendung der Überwachung besteht darin, bestimmte Ereignisse während des Ablaufs eines Programms aufzuzeichnen, beispielsweise ob auf einen vorgegebenen Speicherbereich Lese- oder Schreibzugriffe durchgeführt werden.

Üblicherweise werden die Daten über mehrere Datenbytes hinweg, beispielsweise wort- oder doppelwortweise, verarbeitet. Die Zugriffe auf den Speicher erfolgen daher mit einer auf eine Doppelwort- oder Wortgrenze ausgerichteten Zugriffsadresse, während bei nicht ausgerichteter Adresse byteweise in den Speicher geschrieben bzw. aus dem Speicher gelesen wird. Der zur Festlegung einer Überlappung zwischen dem vorgegebenen und dem vom Zugriff betroffenen Speicherbereich erforderliche Adressenvergleich für jede einzelne Byteadresse führt zu einer entsprechend geringen Verarbeitungsgeschwindigkeit. Im Gegensatz dazu wird bei einer Ausrichtung der Zugriffsadressen auf Wort- bzw. Doppelwortgrenzen die Überwachung des jeweiligen Speicherbereichs gegebenenfalls derart ausgeweitet, daß davon viel zu viele Byteadressen betroffen sind und dadurch Überlappungen vorgetäuscht werden, die die Verarbeitungsleistung beeinträchtigen.

Daher liegt der Erfindung die Aufgabe zugrunde, eine Schaltungsanordnung der eingangs genannten Art zu schaffen, durch die Speicherbereichsüberlappungen unabhängig von der Verarbeitungsbreite möglichst schnell und mit nur geringem Aufwand erkannt werden können.

Diese Aufgabe wird durch die kennzeichnenden Merkmale des Patentanspruches 1 gelöst.

Demnach sind zwei Übertragsermittlungsschaltungen für Subtrahierer vorgesehen, durch die die jeweils bytebezogene Anfangs- und Endadresse des vom Zugriff betroffenen Speicherbereichs mit den Bereichsgrenzen des vorgegebenen Speicherbereichs entsprechend zweier Ungleichungen unmittelbar wechselseitig in Beziehung gesetzt werden. Die aus den Subtraktionen sich ergebenden höchstwertigen Übertragssignale werden durch ein Verknüpfungsglied zu einem Steuersignal verknüpft, das bei erfüllter Verknüpfungsbedingung einen Eingriff in den vorgegebenen Speicherbereich durch den Zugriff anzeigt.

Die Ergebnisse der Ungleichungen können unmittelbar dem jeweiligen höchstwertigen Übertrag entnommen und damit eine Überlappung der beiden Speicherbereiche mit geringem schaltungstechnischem Aufwand festgestellt werden, da nur noch einfache Signale zu verarbeiten sind. Dabei ist jedoch zu berücksichtigen, daß nur bei der Form der Ungleichung $X_E-Y_A \geq 0$ deren Erfüllung durch das Übertragssignal $CO = 1$ angezeigt wird. Kennzeichnet $X_E$ dagegen erst das auf den vorgegebenen Speicherbereich folgende Byte als Speicherabschnitt, dann tritt anstelle der genannten Ungleichung die Ungleichung $X_E-Y_A > 0$. Diese Ungleichung ist aber gleichwertig der Ungleichung $\overline{Y_A-X_E} \geq 0$, wonach der Ausgangsübertrag vor der weiteren Verarbeitung zu invertieren ist. Durch die direkte Auswertung sowohl der Anfangsadressen als auch der Endadressen beider Speicherbereiche, wobei die Datenmenge bei einem Zugriff zwischen einem Datenbyte und einer der Speicherschnittstellenbreite entsprechenden Anzahl von Datenbytes variieren kann, werden zwangsläufig nur die Byteadressen überwacht, die vom Zugriff betroffen sind.

Gemäß einer Weiterbildung der Erfindung ist vor jeder Übertragsermittlungsschaltung ein Auswahlschalter für die Bereitstellung der jeweils benötigten Anfangs- oder Endadresse des vom Zugriff betroffenen Speicherbereichs angeordnet. Welche der beiden Adressen als Minuend bzw. Subtrahend für die jeweils durchzuführende Subtraktion zur Verfügung gestellt wird, ist abhängig von der Richtung der Zugriffsadressenfolge und der entsprechenden Festlegung der Bereichsgrenzen des vom Zugriff betroffenen Speicherbereichs. Die jeweilige Richtung ist dadurch gekennzeichnet, daß die Anfangsadresse entweder einen kleineren oder größeren Adreßwert als die Endadresse aufweist.

Darüber hinaus besteht die Möglichkeit, die Bereichsgrenzen des vorgegebenen Speicherbereichs umzudrehen, so daß deren Anfangsadresse einen größeren Adreßwert als die entsprechende Endadresse aufweist. In Abhängigkeit der unterschiedlichen Voraussetzungen für die beiden zu vergleichenden Speicherbereiche werden die sich aus den Ungleichungen ergebenden Übertragssignale gemäß bevorzugter Ausführungsformen der Erfindung durch ein UND-Glied bzw. ein ODER-Glied verknüpft.

Zur Durchschaltung eines der beiden aus den Verknüpfungen resultierenden Signale ist gemäß einer Weiterbildung der Erfindung ein zusätzlicher Auswahlschalter angeordnet, an dessen Steuereingang ein die Bereichsgrenzen des vorgegebenen Speicherbereichs für steigende oder fallende Adreßfolgen berücksichtigendes Auswahlsignal anliegt.

Gemäß einer anderen Weiterbildung der Erfindung können bei Verwendung eines ringförmig geschlossenen Adreßraums für den Speicher mit zyklischer Adreßfolge (Address Wraparound) die sich aus den Ungleichungen ergebenden Ergebnisse für den Fall, daß der Adressennullpunkt des Adreßraums überschritten wird, korrigiert werden. Zur Bildung eines den Einfluß des Adressennullpunkts auf das jeweils in Beziehung gesetzte Adressenpaar berücksichtigenden Korrekturfaktors wird ausgenutzt, daß nur am Adressennullpunkt alle Bitstellen der Adressen ihren binären Wert im gleichen Sinne wechseln. Ebenso kann der Einfluß des Adressennullpunkts auf das durch den zusätzlichen Auswahlschalter bereitgestellte Verknüpfungssignal durch einen auf gleiche Weise gebildeten zusätzlichen Korrekturfaktor berücksichtigt werden.

Für die Erzeugung der jeweiligen Korrekturfaktoren zur Modifikation der beiden Übertragssignale und des Auswahlsignals brauchen lediglich die beiden höchstwertigen Adressenbitstellen der jeweils in Beziehung gesetzten Adressen verwendet zu werden.

Die Erfindung wird anhand eines in der Zeichnung dargestellten Ausführungsbeispiels näher erläutert. Im einzelnen zeigen

Figur 1 ein Blockschaltbild der Schaltungsanordnung gemäß der Erfindung zur Überwachung von Zugriffen auf einen vorgegebenen Speicherbereich,

Figur 2a und Figur 2b Blockschaltbilder der in Figur 1 gezeigten Verknüpfungsnetzwerke zur Bildung von Korrekturfaktoren bei der Verwendung eines ringförmig geschlossenen Adreßraums (Address Wraparound),

Figur 3 ein Blockschaltbild der in Figur 1 dargestellten Verknüpfungsschaltung zur Anzeige einer Überlappung zwischen dem vorgegebenen und dem vom Zugriff betroffenen Speicherbereich,

Figur 4a die Darstellung der Überlappung gemäß Figur 3 auf einer Adreßachse, und

Figur 4b den Wechsel der binären Werte für die beiden höchstwertigen Adressenbitstellen eines in Beziehung gesetzten Adressenpaars bei Überschreiten des Adressennullpunkts des ringförmig geschlossenen Adreßraums.

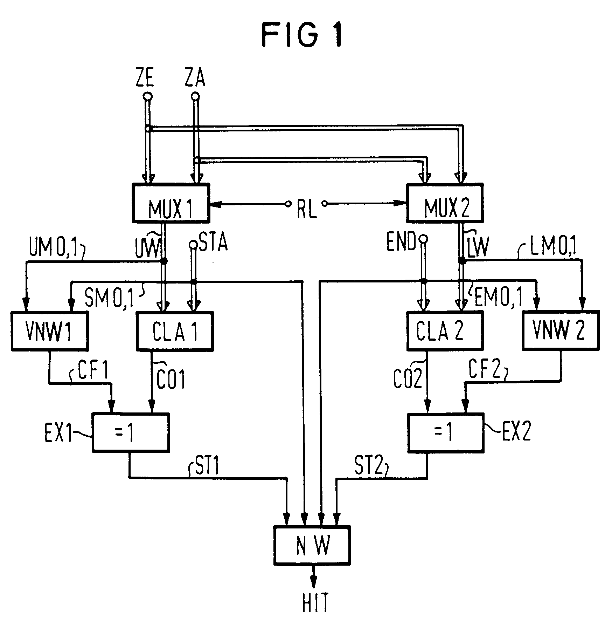

Die erfindungsgemäße Schaltungsanordnung von Figur 1 weist zwei Übertragsermittlungsschaltungen CLA1 und CLA2 für Subtrahierer auf, durch die eine Anfangs- und eine Endadresse ZA und ZE des vom Zugriff betroffenen Speicherbereichs mit der Anfangs- und der Endadresse STA und END des vorgegebenen Speicherbereichs wechselseitig in Beziehung gesetzt werden, wobei die Endadresse END unmittelbar den letzten Speicherabschnitt des vorgegebenen Speicherbereiches kennzeichnet. Der Übertragsermittlungsschaltung CLA1 werden die Anfangsadresse STA des vorgegebenen Speicherbereichs als Minuend und die Anfangs- oder die Endadresse ZA oder ZE des vom Zugriff betroffenen Speicherbereichs als Subtrahend zugeführt. In gleicher Weise erhält die Übertragsermittlungsschaltung CLA2 die Endadresse END des vorgegebenen Speicherbereichs sowie eine der beiden Adressen ZA und ZE des vom Zugriff betroffenen Speicherbereichs als Eingangsoperanden, von denen jedoch die Adresse END den Subtrahend und die ausgewählte Adresse ZA oder ZE den Minuend bilden.

Die so gewählte Beschaltung der Übertragsermittlungsschaltungen CLA1 und CLA2 erfolgt entsprechend den Ungleichungen ($X_E$-$Y_A \geq 0$) und ($Y_E$-$X_A \geq 0$), wobei die Adressen X bzw. Y sich auf den vorgegebenen bzw. vom Zugriff betroffenen Speicherbereich beziehen. Ebenso könnte man, wie bereits erwähnt, anstelle der einen "größer gleich"-Beziehung die "größer"-Beziehung mit jeweils vertauschter Anschaltung der Operanden wählen, wobei die jeweiligen Übertragsausgänge zu invertieren sind.

Die Bereitstellung der jeweils für die Subtraktion benötigten Anfangs- oder Endadresse ZA oder ZE erfolgt durch Auswahlschalter MUX1 und MUX2, deren Ausgänge UW und LW mit den Eingängen der Übertragsermittlungsschaltungen CLA1 und CLA2 verbunden sind. Die Auswahl einer der beiden Adressen ZA und ZE bewirkt jeweils ein Signal RL, das die Bedingung ZA $\leq$ ZE oder ZE $\leq$ ZA kennzeichnet. Damit wird festgelegt, ob die Endadresse ZE im Vergleich zur Anfangsadresse ZA in Richtung zunehmender oder abnehmender Adreßwerte liegt.

Die Ergebnisse der beiden Ungleichungen werden gemäß der Erfindung den beiden höchstwertigen Übertragssignalen CO1 und CO2 unmittelbar an den Ausgängen der Übertragsermittlungsschaltungen CLA1 und CLA2 entnommen. Jeder Übertragsermittlungsschaltung CLA1 bzw. CLA2 ist ein EXOR-Glied EX1 bzw. EX2 nachgeschaltet, dem neben dem jeweiligen Übertragssignal CO1 bzw. CO2 als zweites Eingangssignal ein Korrekturfaktor CF1 bzw. CF2 zugeführt wird. Der Korrekturfaktor CF1 bzw. CF2 ist bei Verwendung eines ringförmig geschlossenen Adreßraums für den Speicher mit zyklischer Adreßfolge über einen Adressennullpunkt hinweg (Address Wraparound) zu berücksichtigen. Zur Ableitung der jeweiligen Korrekturfaktoren CF1 und CF2 durch die Verknüpfungsnetzwerke VNW1 und VNW2 werden von den jeweils in Beziehung gesetzten Adressen, z.B. ZE und STA, die beiden höchstwertigen Adressenbits UM0,1 und SM0,1 bzw. LM0,1 und EM0,1 benutzt.

Die Ausgangssignale ST1 und ST2 der beiden EXOR-Glieder EX1 und EX2, die bei nicht zu berücksichtigenden Korrekturfaktoren CF1 und CF2 mit den Übertragssignalen CO1 und CO2 identisch sind, werden durch eine Verknüpfungsschaltung NW zu einem Steuersignal HIT verknüpft, das unmittelbar einen Eingriff in den vorgegebenen Speicherbereich durch den Zugriff anzeigt. Die Verknüpfungsschaltung NW besteht unter der Voraussetzung STA ≦ END, d.h. daß die Anfangsadresse STA im Vergleich Zur Endadresse END des vorgegebenen Speicherbereichs einen kleineren oder gleichen Adreßwert aufweist, lediglich aus einem UND-Glied. Für den Fall des Vorliegens eines ringförmig geschlossenen Adreßraums (Address Wraparound) und/oder unter der Voraussetzung END ≦ STA, d.h. daß die Endadresse END im Vergleich zur Anfangsadresse STA des vorgegebenen Speicherbereichs einen kleineren oder gleichen Adreßwert aufweist, sind in der Verknüpfungsschaltung NW zusätzliche Verknüpfungselemente zur Berücksichtigung der jeweils beiden höchstwertigen Adressenbits SM0,1 und EM0,1 der Anfangsadresse STA und der Endadresse END angeordnet.

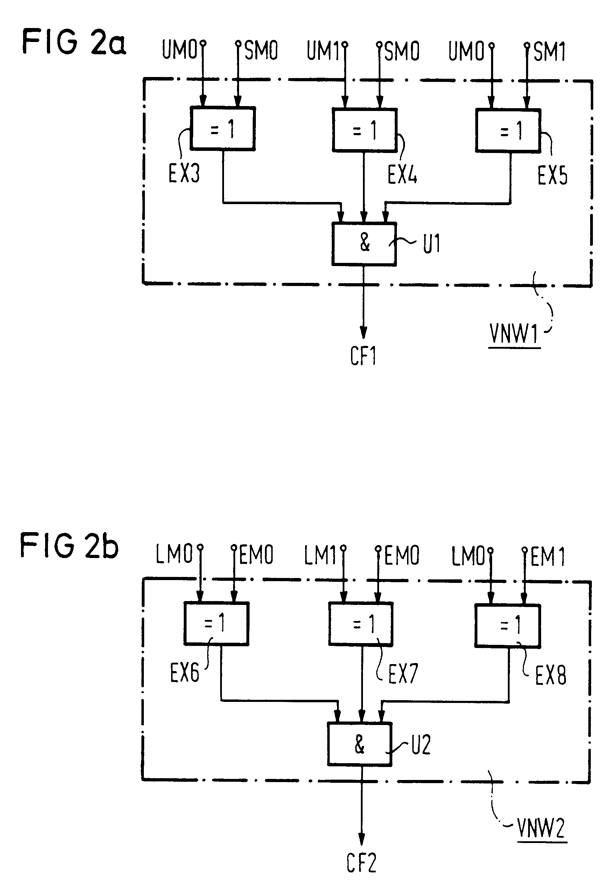

Figur 2a und Figur 2b zeigen die Verknüpfungsschaltungen VNW1 und VNW2 zur Bildung der Korrekturfaktoren CF1 und CF2, mit denen die höchstwertigen Übertragssignale CO1 und CO2 modifiziert werden, um eine Überlappung des vorgegebenen Speicherbereichs mit dem vom Zugriff betroffenen Speicherbereich auch bei Verwendung eines ringförmig geschlossenen Adreßraums mit zyklischer Adreßfolge über einen Adressennullpunkt hinweg exakt feststellen zu können. Dabei wird ausgenutzt, daß sämtliche Adreßbits am Adressennullpunkt des Adreßraums ihren binären Wert im gleichen Sinne wechseln.

Für die Abteilung des jeweiligen Korrekturfaktors CF1 bzw. CF2 genügen daher die beiden höchstwertigen Adressenbits der jeweils in Beziehung gesetzten Adressen. Für das Verknüpfungsnetzwerk VNW1 sind dies die Adressbitstellen

SM0,1 der Anfangsadresse STA des vorgegebenen Speicherbereichs sowie die Adressenbitstellen UM0,1 der vom Auswahlschalter MUX1 durchgeschalteten Anfangsadresse ZA oder Endadresse ZE des vom Zugriff betroffenen Speicherbereichs. In gleicher Weise bilden die Adressenbitstellen EM0,1 der Endadresse END und die Adressenbitstellen LM0,1 der vom Auswahlschalter MUX2 durchgeschalteten Anfangsadresse ZA oder Endadresse ZE die Eingangssignale des Verknüpfungsnetzwerkes VNW2.

Die Verknüpfungsnetzwerke VNW1 und VNW2 bestehen jeweils aus drei EXOR-Gliedern EX3...EX5 bzw. EX6...EX8 mit einem jeweils nachgeschalteten gemeinsamen UND-Glied U1 bzw. U2, dessen Ausgang den jeweiligen Korrekturfaktor CF1 und CF2 liefert. Die Verknüpfung in den einzelnen EXOR-Gliedern eines Verknüpfungsnetzwerkes erfolgt in der Weise, daß in einem ersten EXOR-Glied die jeweils höchstwertige Adressenbitstelle der beiden Adressen, z.B. UM0 und SM0, sowie in den beiden anderen EXOR-Gliedern die höchstwertige Adressenbitstelle der einen Adresse und die zweithöchstwertige Adressenbitstelle der jeweils anderen Adressen, z.B. UM1 und SM0 bzw. UM0 und SM1, in Beziehung gesetzt werden.

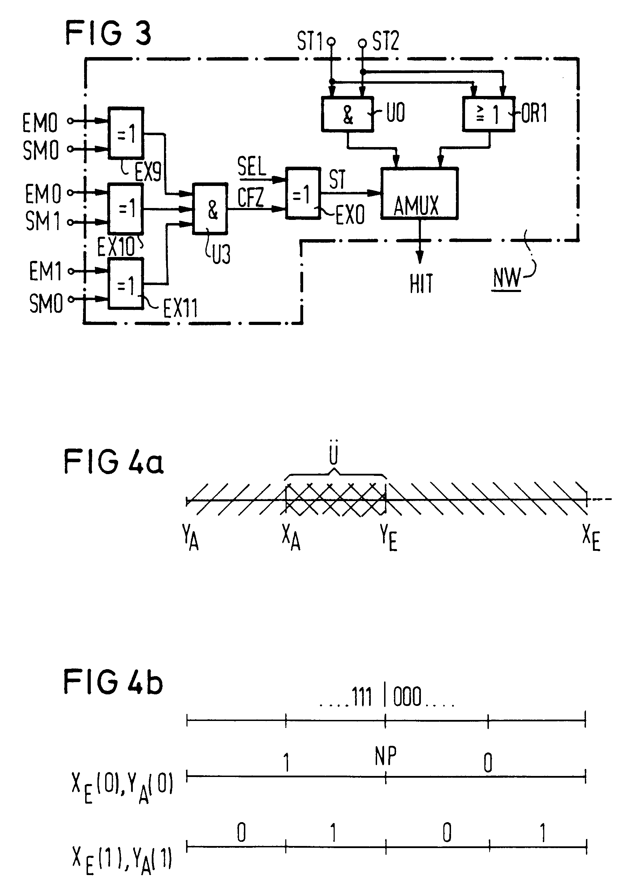

Figur 3 zeigt die Verknüpfungsschaltung NW, die bei erfüllter Verknüpfungsbedingung eine Überlappung der beiden Speicherbereiche anhand des Steuersignals HIT anzeigt. Wie bereits erwähnt, besteht die Verknüpfungsschaltung NW lediglich aus dem UND-Glied U0 zur Verknüpfung der jeweiligen Ausgangssignale ST1 und ST2 der EXOR-Glieder gemäß Figur 1 für den Fall, daß die Voraussetzung STA ≦ END erfüllt ist. Unter der Voraussetzung END ≦ STA, d.h. daß die Endadresse END im Vergleich zur Anfangsadresse STA des vorgegebenen Speicherbereichs einen niedrigeren oder gleichen Adreßwert aufweist, erfolgt zusätzlich zur Verknüpfung der beiden Ausgangssignale ST1 und ST2 im UND-Glied U0 eine parallele Verknüpfung der beiden Signale durch ein ODER-Glied OR1.

In der Verknüpfungsschaltung NW ist daher ein zusätzlicher Auswahlschalter AMUX angeordnet, dessen Eingänge mit dem Ausgang des UND-Glieds U0 und mit dem Ausgang des ODER-Glieds OR1 verbunden sind. Welches der beiden in den vorgeschalteten Verknüpfungsgliedern erzeugten Signale das Steuersignal HIT am Ausgang des zusätzlichen Auswahlschalters AMUX bildet, erfolgt in Abhängigkeit eines auf den Steuereingang des zusätzlichen Auswahlschalters AMUX geführten Signals ST. Dieses Signal ST wird durch ein EXKLUSIV-ODER-Glied EX0 zur Verknüpfung eines die Bedingung END ≦ STA oder STA ≦ END kennzeichnenden Auswahlsignals SEL mit einem den Einfluß des Adressennullpunkts berücksichtigenden zusätzlichen Korrekturfaktor CFZ erzeugt. Das normalerweise mit dem Signal ST identische Auswahlsignal SEL wird nur für den Fall der Verwendung eines ringförmig geschlossenen Adreßraums mit zyklischer Adreßfolge über den Adressennullpunkt hinweg (Address Wraparound) in gleicher Weise wie die aus den Übertragsermittlungsschaltungen gemäß Figur 1 sich ergebenden höchstwertigen Übertragssignale korrigiert.

Die für die Ableitung des zusätzlichen Korrekturfaktors CFZ vorgesehene Verknüpfungsschaltung, bestehend aus den EXOR-Gliedern EX9...EX11 und dem gemeinsamen UND-Glied U3, ist im Aufbau identisch mit den in Figur 2a und Figur 2b dargestellten Verknüpfungsnetzwerken. Ein Unterschied liegt darin, daß die beiden höchstwertigen Adressenbitstellen SM0,1 und EM0,1 von den jeweils in Beziehung gesetzten Bereichsgrenzen END und STA des vorgegebenen Speicherbereichs als Eingangssignale für die EXOR-Glieder verwendet werden.

In Figur 4a ist eine Adreßachse dargestellt, die eine Überlappung Ü zwischen einem vorgegebenen, durch die Bereichsgrenzen $X_A$ und $X_E$ festgelegten Speicherbereich und einem vom Zugriff betroffenen, durch die Bereichsgrenzen $Y_A$ und $Y_E$ definierten Speicherbereich zeigt. Die dargestellten Bereichsgrenzen der einzelnen Speicherbereiche können je nach den oben erwähnten Voraussetzungen durch die Anfangs- und die Endadresse STA und END bzw. ZA und ZE der jeweiligen Speicherbereiche ersetzt werden.

Figur 4b zeigt einen Ausschnitt des ringförmig geschlossenen Adreßraums einschließlich des Adressennullpunkts NP, bei dessen Überschreiten auf die höchste Speicheradresse ...111 die niedrigste Speicheradresse 000... folgt. Für ein in Beziehung zu setzendes Adressenpaar $X_E$ und $Y_A$ ist der Wechsel der jeweiligen höchstwertigen Adressenbitstelle $X_E(0)$ und $Y_A(0)$ beim Überschreiten des Adressennullpunkts NP vom binären Wert 1 zum binären Wert 0 verdeutlicht. In gleicher Weise wechseln die binären Werte von 0 auf 1 in der zweithöchstwertigen Adressenbitstelle $X_E(1)$ bzw. $Y_A(1)$ der jeweils in Beziehung gesetzten Adressen, so daß die Korrekturfaktoren für die Übertragungssignale CO1 und CO2 und das Auswahlsignal SEL gemäß den Figuren 1 und 3 mit geringem Aufwand zu ermitteln sind.

**Patentansprüche**

1. Schaltungsanordnung zur Überwachung von Zugriffen auf einen durch zwei Adressen (X:STA und END) vorgegebenen Speicherbereich eines Speichers, um Überlappungen zwischen dem vorgegebenen und dem vom Zugriff betroffenen Speicherbereich festzustellen, **dadurch gekennzeichnet,**

- daß die Anfangs- und die Endadresse (Y:ZA und ZE) des vom Zugriff betroffenen Speicherbereichs mit den Bereichsgrenzen (STA und END) des vorgegebenen Speicherbereichs entsprechend den Ungleichungen

  $(Y_E-X_A \geq 0)$ und $(X_E-Y_A \geq 0)$ bzw.
  $(Y_E-X_A \geq 0)$ und $\overline{(Y_A-X_E \geq 0)}$

  bei Kennzeichnung des auf den letzten Speicherabschnitt des vorgegebenen Speicherbereichs folgenden Speicherabschnitts durch $X_E$ durch zwei Übertragsermittlungsschaltungen (CLA1 und CLA2) für Subtrahierer wechselseitig in Beziehung gesetzt werden, und

- daß die dabei gewonnenen beiden höchstwertigen Übertragssignale (CO1 und CO2) durch ein Verknüpfungsglied zu einem Steuersignal (HIT) verknüpft werden, das bei erfüllter Verknüpfungsbedingung einen Eingriff in den vorgegebenen Speicherbereich durch den Zugriff anzeigt.

2. Schaltungsanordnung nach Anspruch 1, **dadurch gekennzeichnet,** daß den Eingängen der Übertragsermittlungsschaltungen (CLA1 und CLA2) jeweils ein Auswahlschalter (MUX1 und MUX2) für die Bereitstellung der jeweils benötigten Anfangs- oder Endadresse (ZA oder ZE) des vom Zugriff betroffenen Speicherbereichs abhängig von der Bedingung ZA ≦ ZE oder ZE ≦ ZA vorgeschaltet ist.

3. Schaltungsanordnung nach Anspruch 2, **dadurch gekennzeichnet,** daß unter der Voraussetzung STA ≦ END und ZA ≦ ZE die Beziehung

   $(ZE-STA \geq 0)$ & $(END-ZA \geq 0)$ = HIT bzw.
   $(ZE-STA \geq 0)$ & $\overline{(ZA-END \geq 0)}$ = HIT

   sowie unter der Voraussetzung STA ≦ END und ZE ≦ ZA die Beziehung

   $(ZA-STA \geq 0)$ & $(END-ZE \geq 0)$ = HIT bzw.
   $(ZA-STA \geq 0)$ & $\overline{(ZE-END \geq 0)}$ = HIT

   zu erfüllen ist, wobei das Verknüpfungsglied ein UND-Glied (U0) ist.

4. Schaltungsanordnung nach Anspruch 2, **dadurch gekennzeichnet,** daß unter der Voraussetzung END ≦ STA und ZA ≦ ZE die Beziehung

$(ZE-STA \geq 0) \lor (END-ZA \geq 0) = $ HIT bzw.
$(ZE-STA \geq 0) \lor \overline{(ZA-END \geq 0)} = $ HIT

sowie unter der Voraussetzung END $\leq$ STA und ZE $\leq$ ZA die Beziehung

$(END-ZE \geq 0) \lor (ZA-STA \geq 0) = $ HIT bzw.
$(ZA-STA \geq 0) \lor \overline{(ZE-END \geq \overline{0})} = $ HIT

zu erfüllen ist, wobei das Verknüpfungsglied ein ODER-Glied (OR1) ist.

5. Schaltungsanordnung nach den Ansprüchen 3 und 4, **dadurch gekennzeichnet,** daß der Ausgang des UND-Glieds (U0) und der Ausgang des ODER-Glieds (OR1) mit den Eingängen eines zusätzlichen Auswahlschalters (AMUX) verbunden sind, dessen Steuereingang ein die Bedingung END $\leq$ STA oder STA $\leq$ END kennzeichnendes Auswahlsignal (SEL) zur Durchschaltung eines der beiden aus den Verknüpfungen resultierenden Signale zugeführt wird.

6. Schaltungsanordnung nach einem der Ansprüche 1 bis 4, **dadurch gekennzeichnet,** daß bei Verwendung eines ringförmig geschlossenen Adreßraums für den Speicher mit zyklischer Adreßfolge über einen Adressennullpunkt hinweg (Address Wraparound) den Ausgängen der Übertragsermittlungsschaltungen (CLA1 und CLA2) jeweils ein EXKLUSIV ODER-Glied (EX1 bzw. EX2) nachgeschaltet ist, dem neben dem jeweiligen Übertragssignal (CO1 bzw. CO2) als zweites Eingangssignal ein den Einfluß des Adressennullpunkts auf das jeweils in Beziehung gesetzte Adressenpaar $X_E$ und $Y_A$ bzw. $Y_E$ und $X_A$ berücksichtigender Korrekturfaktor (CF1 bzw. CF2) zugeführt wird.

7. Schaltungsanordnung nach den Ansprüchen 5 und 6, **dadurch gekennzeichnet,** daß mit dem Steuereingang des zusätzlichen Auswahlschalters (AMUX) der Ausgang eines weiteren EXKLUSIV ODER-Glieds (EX0) verbunden ist, dem neben dem die Bedingung END $\leq$ STA oder STA $\leq$ END kennzeichnenden Auswahlsignal (SEL) als zweites Signal ein den Einfluß des Adressennullpunkts auf das durchzuschaltende Signal berücksichtigender zusätzlicher Korrekturfaktor (CFZ) zugeführt wird.

8. Schaltungsanordnung nach Anspruch 6 oder 7, **dadurch gekennzeichnet,** daß der jeweilige Korrekturfaktor (z.B. CF1) bzw. der zusätzliche Korrekturfaktor (CFZ) aus den beiden höchstwertigen Adressenbits (0 und 1) der jeweils in Beziehung gesetzten Adressen durch drei EXKLUSIV ODER-Glieder (z.B. EX3...EX5 bzw. EX9...EX11) und einem nachgeschalteten gemeinsamen UND-Glied (z.B. U1 bzw. U3) nach der Beziehung

$(X_E(0) \# Y_A(0)) \& (X_E(0) \# Y_A(1)) \& (X_E(1) \# Y_A(0)) = $ CF1 bzw.
$(X_E(0) \# X_A(0)) \& (X_E(0) \# X_A(1)) \& (X_E(1) \# X_A(0)) = $ CFZ

abgeleitet werden.

# FIG 1

FIG 2a

FIG 2b

## FIG 3

ST1    ST2

EM0   =1   EX9

SM0

&   U0    ≥ 1   OR1

EM0   =1

SM1   &   SEL / CFZ   =1   ST   AMUX

EX10   U3   EX0

EM1   =1

SM0   EX11

HIT    NW

## FIG 4a

Ü

$Y_A$    $X_A$    $Y_E$    $X_E$

## FIG 4b

....111 | 000....

NP

1    0

$X_E(0), Y_A(0)$

0   1   0   1

$X_E(1), Y_A(1)$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 263 218 (ANDERSON)<br>* Abbildungen 1,2,9-12 *<br>* Spalte 7, Zeile 54 - Spalte 11, Zeile 15 *<br>* Spalte 14, Zeile 46 - Spalte 16, Zeile 8 * | 1 | G06F12/14<br>G06F9/38<br>G06F9/30 |
| A | --- | 6 | |
| A | EP-A-0 417 707 (HITACHI)<br>* Zusammenfassung; Abbildungen 2,11 *<br>* Spalte 9, Zeile 43 - Spalte 11, Zeile 4 *<br>* Spalte 17, Zeile 1 - Spalte 19, Zeile 18 * | 1,2,4 | |
| A | ---<br>US-A-4 627 017 (BLOUNT ET AL)<br>* das ganze Dokument *<br>--- | 1,4,6 | |
| A | PATENT ABSTRACTS OF JAPAN<br>vol. 8, no. 72 (P-265)(1509) 4. April 1984<br>& JP-A-58 217 054 ( HITACHI ) 16. Dezember 1983<br>* Zusammenfassung * | 1 | |
| | ------ | | **RECHERCHIERTE SACHGEBIETE (Int. Cl.5 )**<br><br>G06F |

Der vorliegende Recherchenbericht wurde für alle Patentansprüche erstellt

| Recherchenort | Abschlußdatum der Recherche | Prüfer |
|---|---|---|
| DEN HAAG | 19 NOVEMBER 1992 | POWELL D. |